# EUROPÄISCHE PATENTANMELDUNG

(11) **EP 4 721 839 A1**
(43) Veröffentlichungstag der Anmeldung: **08.04.2026**
(21) Anmeldenummer: 24020297.8
(22) Anmeldetag: 02.10.2024
(51) Int. Cl.: B01D 53/04, B01D 53/14, B01D 53/26

(54) **VERFAHREN UND ANLAGE ZUR ABTRENNUNG VON KOHLENDIOXID**

(71) Anmelder: Linde GmbH, 82049 Pullach (DE)
(72) Erfinder: Fitzthum, Mario, 82049 Pullach (DE); Leitmayr, Werner, 82049 Pullach (DE); Spenner, Dirk, 82049 Pullach (DE); Starke, Christian, 82049 Pullach (DE)
(74) Vertreter: Fischer, Werner

(57) **Zusammenfassung**

Ein Verfahren (100) zur Abtrennung von Kohlendioxid aus einem oder mehreren Kohlendioxid enthaltenden Gasgemischen (1) wird vorgeschlagen. Dieses umfasst ein Bereitstellen eines ersten Kohlendioxid enthaltenden Einsatzstroms (2) und eines zweiten Kohlendioxid enthaltenden Einsatzstroms (3) unter Verwendung des oder der Gasgemische (1), ein Bereitstellen einer ersten Trenneinrichtung (10), die zur adsorptiven Abtrennung von Kohlendioxid eingerichtet ist, und einer zweiten Trenneinrichtung (20), die zur absorptiven Abtrennung von Kohlendioxid eingerichtet ist, sowie ein adsorptives Abtrennen von Kohlendioxid aus dem ersten Einsatzstrom (2) in der ersten Trenneinrichtung (10) und ein absorptives Abtrennen von Kohlendioxid aus dem zweiten Einsatzstrom (3) in der zweiten Trenneinrichtung (20). Die erste Trenneinrichtung (10) und die zweite Trenneinrichtung (20) werden parallel zueinander betrieben. In der ersten Trenneinrichtung (10) wird eine Verdichtung unter Verwendung einer Verdichteranordnung (11) vorgenommen, in und/oder stromab der Verdichtungswärme abgeführt wird. In der zweiten Trenneinrichtung (20) wird ferner eine Regeneration eines Absorptionsmittels unter Verwendung von Regenenerationswärme vorgenommen, wobei die in und/oder stromab der Verdichteranordnung (11) abgeführte Verdichtungswärme, oder ein Teil hiervon, bei der Bereitstellung der Regenerationswärme verwendet wird. Eine entsprechende Anlage wird ebenfalls vorgeschlagen.

## Beschreibung

### Gebiet

Die vorliegende Offenbarung betrifft ein Verfahren sowie eine Anlage zur Abtrennung von Kohlendioxid aus einem oder mehreren Kohlendioxid enthaltenden Gasgemischen.

### Hintergrund

Die Sorge um die globale Erwärmung und den Klimawandel verstärkt die weltweiten Bemühungen, den Eintrag von Treibhausgasen wie Kohlendioxid in die Atmosphäre zu reduzieren. Technologien zur Kohlenstoffabscheidung und -speicherung (engl. Carbon Capture and Storage, CCS) spielen eine strategische Rolle bei der Erreichung der heutigen Ziele zur Reduzierung der Kohlenstoffemissionen.

Das Augenmerk richtet sich zunehmend auf die Notwendigkeit, Kohlendioxid aus Prozessabgasen und Rauchgasen zu entfernen, die bei verschiedenen Prozessen wie der Wasserstofferzeugung, der Erzeugung von Prozesswärme, der Stromerzeugung, der Herstellung von Chemikalien sowie der Zement- und Stahlproduktion freigesetzt werden. In einem ersten Schritt bietet es sich dabei an, Prozesse mit vergleichsweise einfach bearbeitbaren Quellen von Kohlendioxid in den Blick zu nehmen. Hierbei handelt es sich um Quellen, in denen Kohlendioxid in hohen Konzentrationen und/oder Partialdrücken vorliegt. Das abgeschiedene Kohlendioxid kann sicher gelagert oder einer Nutzung, beispielsweise im Lebensmittelbereich oder zur Herstellung von Chemikalien wie Methanol, zugeführt werden.

Es besteht weiterhin der Bedarf nach verbesserten Ansätzen zur Abtrennung von Kohlendioxid aus Gasgemischen.

### Übersicht

Vor diesem Hintergrund werden ein Verfahren und eine Anlage mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren dient zur Abtrennung von Kohlendioxid aus einem oder mehreren Kohlendioxid enthaltenden Gasgemischen. Das Verfahren umfasst ein Bereitstellen eines ersten Kohlendioxid enthaltenden Einsatzstroms und eines zweiten Kohlendioxid enthaltenden Einsatzstroms unter Verwendung des oder der Gasgemische, ein Bereitstellen einer ersten Trenneinrichtung, die zur adsorptiven Abtrennung von Kohlendioxid eingerichtet ist, und einer zweiten Trenneinrichtung, die zur absorptiven Abtrennung von Kohlendioxid eingerichtet ist, sowie ein adsorptives Abtrennen von Kohlendioxid aus dem ersten Einsatzstrom in der ersten Trenneinrichtung und ein absorptives Abtrennen von Kohlendioxid aus dem zweiten Einsatzstrom in der zweiten Trenneinrichtung.

Die erste und zweite Trenneinrichtung werden parallel zueinander betrieben, d.h. der erste Einsatzstrom wird der ersten Trenneinrichtung zugeführt, ohne dass dieser, oder ein Vorläuferstrom des ersten Einsatzstroms, durch die zweite Trenneinrichtung geführt worden ist, und der zweite Einsatzstrom wird der zweiten Trenneinrichtung zugeführt, ohne dass dieser, oder ein Vorläuferstrom des zweiten Einsatzstroms, durch die erste Trenneinrichtung geführt worden ist. Der Begriff "parallel" ist dabei insbesondere im Sinne einer zeitlichen Parallelität zu verstehen.

In der ersten Trenneinrichtung wird eine Verdichtung des ersten Einsatzstroms unter Verwendung einer Verdichteranordnung vorgenommen, in und/oder stromab der Verdichtungswärme abgeführt wird.

Es versteht sich, dass dann, wenn hier von "einer" Verdichtung und "einer" Verdichteranordnung die Rede ist, dies die Verwendung mehrerer Verdichtungsschritte und Verdichteranordnung nicht ausschließt. Im Falle mehrerer Verdichtungsschritte und Verdichteranordnungen, die auch Teilschritte oder Verdichtungsstufen in einer mehrstufigen Verdichteranordnung sein können, kann stromab jedes Verdichtungsschritts, jeder Verdichteranordnung oder jeder Verdichterstufe eine Abfuhr von Wärme gemäß hier vorgeschlagener Ausgestaltungen erfolgen.

Die in und/oder stromab der Verdichteranordnung abgeführte Verdichtungswärme, oder ein Teil hiervon, wird in dem vorgeschlagenen Verfahren zur Bereitstellung von Regenerationswärme für eine Regeneration eines Absorptionsmittels in der zweiten Trenneinrichtung verwendet.

Beispielsweise kann die Regeneration des Absorptionsmittels unter Verwendung einer Regenerationskolonne mit einem Sumpfverdampfer vorgenommen. Die in und/oder stromab der Verdichteranordnung abgeführte Verdichtungswärme, oder ein Teil hiervon, kann dabei zur Beheizung des Sumpfverdampfers der Regenerationskolonne eingesetzt werden. Andere Ausgestaltungen umfassen zusätzlich oder alternativ hierzu andere Heizaufgaben im Zuge der Regeneration des Absorptionsmittels, beispielsweise dessen Anwärmung vor einer Einspeisung in eine Regenerationskolonne.

Die erste und die zweite Trenneinrichtung können räumlich getrennt voneinander und in einem gewissen Abstand zueinander positioniert sein, sofern Mittel bereitgestellt sind, die dazu eingerichtet sind, Wärme zu transferieren. Hierbei kann es sich insbesondere um eine Verbindungsleitung handeln, die einen Wärmeträger von der ersten zu der zweiten Trenneinrichtung führt. Beispielsweise kann es sich bei dem Wärmeträger um Dampf handeln, der in einer Dampfleitung geführt wird. Nach der Bereitstellung der Verdichtungswärme und entsprechender Abkühlung kann in bestimmten Ausgestaltungen vorgesehen sein, Kondensat von der zweiten zu der ersten Trenneinrichtung zurückzuführen. Auf diese Weise kann ein Kreislauf geschaffen werden. Die hier vorgeschlagenen Ausgestaltungen umfassen jedoch, die Wärmeübertragung bzw. den Wärmetransfer ohne eine Temperaturerhöhung unter Verwendung einer Wärmekraftmaschine wie einer Wärmepumpe durchzuführen.

Für die großtechnische direkte Abtrennung von Kohlendioxid aus Kohlendioxid enthaltenden Gasgemischen, die beispielsweise in der konventionellen Wasserstoff-, Zement- oder Stahlproduktion oder auch in Kraftwerken als Rauch- oder Prozessgase anfallen, existieren derzeit überwiegend zwei Ansätze, nämlich die adsorptive Entfernung durch Druckwechseladsorption und anschließende partielle Kondensation sowie die absorptive Entfernung durch eine Wäsche, also durch chemisorptives Trennen unter Verwendung eines Absorptions- bzw. Waschmittels. Beide Prozesse sind per se bekannt und kommen in dem vorgeschlagenen Verfahren in der ersten und zweiten Trenneinrichtung zum Einsatz. Das hier vorgeschlagene Verfahren und seine Ausgestaltungen verknüpfen beide Prozesse in besonders vorteilhafter Weise.

Der adsorptive Prozess, der von der Anmelderin auch mit dem Markennamen HISORP^{®} CC bezeichnet wird, und der in der ersten Trenneinrichtung durchgeführt wird, benötigt hauptsächlich Energie zum Verdichten von Gasen in Verdichtereinheiten. Typischerweise handelt es sich hierbei um 150 bis 600 kWh pro Tonne Kohlendioxid bei einer Reinheit von mehr als 95 mol% und einem Druck bei 30 bar. Aufgrund der Prozessführung ist dabei ein Rückkühlen von bei der Kompression erwärmten Gasen, d.h. die Abfuhr von Verdichtungswärme, notwendig und erwünscht. Um die Verdichterarbeit so gering wie möglich zu halten, ist eine möglichst niedrige Temperatur am Eintritt einer Verdichterstufe anzustreben. Die Verdichter sind hierzu mit Zwischen- und Schlusskühlern ausgerüstet, über die Wärme während und nach der Verdichtung abgeführt wird, wobei hier vorgeschlagene Ausgestaltungen an beliebiger Stelle abgeführte Wärmen nutzen kann.

Eine beliebige Anzahl von Verdichtungsstufen kann vorgesehen sein, und vor und nach sämtlichen oder einigen der Verdichtungsstufen können sich Kühler befinden. Es versteht sich, dass nicht in allen hier vorgeschlagenen Ausgestaltungen die in allen Zwischenkühlern und dem Abschlusskühler abgeführte Verdichtungswärme in der hier vorgeschlagenen Weise genutzt wird. Mit anderen Worten kann das Verfahren in Ausgestaltungen auch nur mit einem oder einigen der Zwischenkühler sowie mit oder ohne Abschlusskühler durchgeführt werden. Außerdem kann in dem Verfahren in Ausgestaltungen auch nur ein Teil der abgeführten Verdichtungswärme in der zweiten Trenneinrichtung entsprechend genutzt werden.

Die in der ersten Trenneinrichtung anfallende Verdichtungs- bzw. Abwärme liegt in gleicher Größenordnung wie die für die Verdichtung eingesetzte Energie. Üblicherweise fällt sie auf einem niedrigen Temperaturniveau von unter 100°C an.

Das chemisorptive bzw. absorptive Verfahren mittels einer Kohlendioxidwäsche unter Verwendung eines Absorptionsmittels wiederum, das in der zweiten Trenneinrichtung durchgeführt wird, benötigt vor allem thermische Energie für die Regenerierung des mit Kohlendioxid beladenen Adsorptionsmittels. Typisch hierbei sind spezifische thermische Energien von 200 bis 900 kWh pro Tonne Kohlendioxid, allerdings auf einem höheren Temperaturniveau von über 100°C.

Die Problemstellung in der Industrie besteht darin, dass die Abwärme des adsorptiven Verfahrens bislang nicht genutzt wird. Denkbar wäre hier der Einsatz einer sogenannten Wärmepumpe zur Anhebung des Temperaturniveaus, was jedoch mit zusätzlichem Equipment und damit Investitionskosten verbunden ist. Ein derartiger Einsatz ist daher in den hier vorgeschlagenen Ausgestaltungen nicht vorgesehen. Die thermische Energie für das chemisorptive Verfahren wird bislang üblicherweise durch das Verbrennen von fossilen Energieträgern bereitgestellt, was jedoch zu zusätzlichen Sekundäremissionen von Kohlendioxid führt. Regenerative Energie auf dem benötigten Temperaturniveau ist großtechnisch nicht verfügbar. Daher ist weiterhin, je nach Standort und Anwendung, ggf. auch eine neue Infrastruktur (Pipeline) für die Versorgung mit z.B. Erdgas als fossilem Energieträger erforderlich.

Das vorgeschlagene Verfahren und seine Ausgestaltungen setzen hier an und eliminieren die erwähnten Probleme. Das vorgeschlagene Verfahren und seine Ausgestaltungen umfassen zunächst eine Nutzung der in der Verdichteranordnung der ersten Trenneinrichtung anfallenden Verdichtungswärme in der zweiten Trenneinrichtung. Ausgestaltungen des Verfahrens betreffen eine besonders vorteilhafte Erhöhung des Temperaturniveaus, auf dem die Verdichtungswärme der zweiten Trenneinrichtung zugeführt wird.

Derartige Ausgestaltungen umfassen, dass die in und/oder stromab der Verdichteranordnung der ersten Trenneinrichtung anfallende Verdichtungswärme zumindest zu einem Teil auf einem Temperaturniveau von mehr als 100°C oder mehr als 130°C und bis zu 150°C oder bis zu 200°C abgeführt wird. Somit erfolgt in entsprechenden Ausgestaltungen eine Anpassung der im Zusammenhang mit dem adsorptiven Verfahren vorgenommenen Verdichtung in der ersten Trenneinrichtung zur Bereitstellung von Abwärme auf einem höheren Temperaturniveau zur großtechnischen Nutzung in der zweiten Trenneinrichtung. Dadurch wird die anfallende Abwärme für die Dampferzeugung zur Regenerierung der Absorptionsflüssigkeit in dem parallelen chemisorptiven bzw. absorptiven Prozess nutzbar. Der Gesamtprozess wird effektiver, da der spezifische Energiebedarf reduziert werden kann.

Die adsorptive Abtrennung von Kohlendioxid, wie sie in der ersten Trenneinrichtung erfolgt, weist generell einen hohen Strombedarf auf. Durch das Anheben des Temperaturniveaus der Kühlschritte zur Abfuhr der Verdichtungswärme erhöht sich die spezifische Verdichterleistung zusätzlich um mindestens 10%, also von 150 bis 600 kWh pro Tonne Kohlendioxid auf ca. 165 bis 660 kWh pro Tonne Kohlendioxid. Eine fachkundige Person würde daher ein solches Anheben des Temperaturniveaus nicht in Betracht ziehen, sondern würde evtl. eine Wärmepumpe (oder anderes zusätzliches Equipment) in Betracht ziehen, um das Temperaturniveau der Abwärme der Verdichteranordnung von 40 bis 80°C auf mehr als 100°C, vorzugsweise mehr als 130°C, anzuheben.

Das hier vorgeschlagene direkte Anheben des Temperaturniveaus der bei der Zwischen- und/oder Endkühlung anfallenden Abwärme führt zwar einerseits zu einer Erhöhung der Verdichterarbeit aufgrund einer ineffektiveren Kühlung, aber im Gegenzug zu bekannten Konzepten kann die anfallende Abwärme bei der adsorptiven Abtrennung im Bereich von 165 bis 660 kWh pro Tonne Kohlendioxid großtechnisch genutzt werden. Dies entspricht einer Wärmepumpenzahl (engl. Coefficient of Performance, COP) von 4 bis 8 und liegt damit deutlich über dem typischen Bereich einer Wärmepumpe für die gleiche Aufgabe. Zusätzliches Equipment ist bei dem vorgeschlagenen Verfahren außerdem nicht notwendig.

In Ausgestaltungen des vorgeschlagenen Verfahrens kann die in und/oder stromab der Verdichteranordnung abgeführte Verdichtungswärme zur Erzeugung von Dampf verwendet werden, der dann für die genannten Zwecke, also beispielsweise zur Beheizung des Sumpfverdampfers der Regenerationskolonne oder zur Erwärmung des Absorptionsmittels in der zweiten Trenneinrichtung verwendet wird. Es kann also auf Dampf als Heizmedium bzw. Wärmeträger zurückgegriffen werden, der auch in herkömmlichen absorptiv arbeitenden Einrichtungen zur Abtrennung von Kohlendioxid eingesetzt wird.

Durch eine Kombination aus dem adsorptiven Verfahren und dem absorptiven Verfahren können die spezifischen Betriebskosten für die Kohlendioxidabtrennung aus

Gasgemischen gegenüber dem Stand der Technik deutlich um 10 bis 30% reduziert werden. Dabei wird ein Großteil des Kohlendioxids insbesondere mittels des adsorptiven Verfahrens abgetrennt, während ein kleinerer Teil unter Nutzung der hierbei anfallenden Abwärme parallel absorptiv entfernt wird. Weiterhin ist durch das integrierte Konzept keine Versorgung mit fossilen Energieträgern zur Dampferzeugung und damit verbundenen zusätzlichen Betriebskosten notwendig. Der Gesamtprozess bleibt basierend auf dem Verbrauch elektrischer Energie.

In Ausgestaltungen des vorgeschlagenen Verfahrens kann ein in der zweiten Trenneinrichtung wasserhaltig anfallender Kohlendioxidstrom, oder ein Teil hiervon, der ersten Trenneinrichtung, insbesondere auf der Saugseite einer (weiteren) Verdichtereinheit, zugeführt werden. Auf diese Weise kann auf eine separate Trocknung des wasserhaltigen Kohlendioxidstroms verzichtet werden. Die Erfindung ist hinsichtlich einer Vereinigung von Stoffströmen, insbesondere eines wasserhaltigen Kohlendioxidstroms, nicht beschränkt. Vielmehr kann eine Zuspeisung von Produkt- oder Kohlendioxidströmen aus einer der Trenneinheiten an beliebiger geeigneter Stelle in die jeweils andere Trenneinheit erfolgen. Auch eine Aufteilung auf unterschiedliche Positionen ist möglich.

Ein Mengenstrom des ersten Einsatzstroms und des zweiten Einsatzstroms kann in hier vorgeschlagenen Ausgestaltungen derart eingestellt werden, dass die in und/oder stromab der Verdichteranordnung der ersten Trenneinrichtung abgeführte Verdichtungswärme den Wärmebedarf zur Beheizung des Sumpfverdampfers der Regenerationskolonne der zweiten Trenneinrichtung deckt, so dass auf zusätzliche Wärmequellen verzichtet werden kann. In Ausgestaltungen der vorliegenden Erfindung kann durch die vorgeschlagenen Maßnahmen auch Dampf zum Export für andere Verbraucher bereitgestellt werden.

In bestimmten, hier vorgeschlagenen Ausgestaltungen kann vorgesehen sein, zwei oder mehr Kohlendioxid enthaltende Gasgemische aus unterschiedlichen Quellen zu verwenden, insbesondere solche mit unterschiedlichen Kohlendioxidgehalten. Hierbei kann der erste Einsatzstrom ausschließlich, vorwiegend oder teilweise unter Verwendung eines der Gasgemische und der zweite Einsatzstrom ausschließlich, vorwiegend oder teilweise unter Verwendung eines anderen der Gasgemische bereitgestellt werden. Beispielsweise kann ein Gasgemisch mit einem höheren Kohlendioxidgehalt vorwiegend oder ausschließlich der ersten und ein Gasgemisch mit einem geringeren Kohlendioxidgehalt vorwiegen oder ausschließlich der zweiten Trenneinheit zugeführt werden. Auch eine Einstellung eines Kohlendioxidgehalts durch eine geeignete Mischung kann vorgesehen sein. Bei den Gasgemischen kann es sich beispielsweise um ein Abgas einer Gasturbine oder um ein Rauchgas aus einem befeuerten Ofen handeln.

Die obigen Erläuterungen zusammenfassend kann vorgesehen sein, dass das eine oder die mehreren Gasgemische Rauchgas und/oder Prozessgas ist oder sind und/oder hieraus gebildet werden, dass die adsorptive Trennung in der ersten Trenneinrichtung unter Verwendung einer Adsorptionseinheit durchgeführt wird und/oder in der ersten Trenneinrichtung abgetrenntes Kohlendioxid teilkondensiert wird, und/oder dass die absorptive Trennung in der zweiten Trenneinrichtung unter Verwendung eines aminhaltigen Absorptionsmittels durchgeführt wird.

Die vorgeschlagene Anlage zur Abtrennung von Kohlendioxid aus einem oder mehreren Kohlendioxid enthaltenden Gasgemischen weist eine erste Trenneinrichtung, die zur adsorptiven Abtrennung von Kohlendioxid eingerichtet ist, und eine zweite Trenneinrichtung, die zur absorptiven Abtrennung von Kohlendioxid eingerichtet ist, sowie eine Verbindungsleitung von der ersten Trenneinrichtung zu der zweiten Trenneinrichtung auf. Die Anlage ist zum Bereitstellen eines ersten Kohlendioxid enthaltenden Einsatzstroms und eines zweiten Kohlendioxid enthaltenden Einsatzstroms unter Verwendung des einen oder der mehreren Gasgemische, und zum adsorptiven Abtrennen von Kohlendioxid aus dem ersten Einsatzstrom in der ersten Trenneinrichtung und zum adsorptiven Abtrennen von Kohlendioxid aus dem zweiten Einsatzstrom in der zweiten Trenneinrichtung eingerichtet. Dazu sind eine Adsorptionseinheit einerseits und eine Absorptionseinheit andererseits bereitgestellt.

Die Anlage ist dafür eingerichtet, in der ersten Trenneinrichtung eine Verdichtung unter Verwendung einer Verdichteranordnung vorzunehmen und in und/oder stromab derselben Verdichtungswärme abzuführen. Die Anlage ist ferner dafür eingerichtet, in der zweiten Trenneinrichtung eine Regeneration eines Absorptionsmittels unter Verwendung von Regenerationswärme vorzunehmen, und die Anlage ist dafür eingerichtet, die in und/oder stromab der Verdichteranordnung abgeführte Verdichtungswärme, oder einen Teil hiervon, über einen in der Verbindungsleitung geführten Wärmeträger zur Bereitstellung von Regenerationswärme zu verwenden. Der Wärmeträger, insbesondere Dampf, kann dabei in der oben erläuterten Weise geführt werden.

Insbesondere ist die vorgeschlagene Anlage dafür eingerichtet, den Wärmeträger ohne Temperaturerhöhung mittels einer Wärmekraftmaschine zwischen der ersten Trenneinrichtung und der zweiten Trenneinrichtung zu führen, wodurch sich die oben bereits erläuterten Vorteile ergeben.

Weitere Vorteile und Merkmale, die bezüglich des vorgeschlagenen Verfahrens und seinen Ausgestaltungen beschrieben wurden, gelten auch für die vorgeschlagene Anlage und umgekehrt. Diese werden entsprechend nur einmalig beschrieben; auf die jeweiligen Erläuterungen wird verwiesen.

Die im Rahmen der vorliegenden Offenbarung verwendeten Begriffe haben grundsätzlich die in der Fachwelt anerkannten Bedeutungen. Adsorptive und absorptive Verfahren zur Entfernung von Kohlendioxid sind grundsätzlich bekannt und in der Fachliteratur beschrieben. Beispielsweise sei auf die Kapitel 6 und 7, "Absorption capture systems" und "Adsorption capture systems" bei Steve A. Rackley, "Carbon Capture and Storage", 2. Auflage, Butterworth-Heinemann, 2017, verwiesen. Für die adsorptiven Verfahren kommt vorliegend insbesondere eine Druckwechseladsorption zum Einsatz, der eine Teilkondensation von Kohlendioxid folgen kann. Insbesondere kann das von der Anmelderin als "HISORP ^{®} CC" bezeichnete Verfahren zum Einsatz kommen, das an unterschiedlichen Stellen beschrieben ist. Als Absorptionsmittel in einem absorptiven Verfahren kann beispielsweise eine aminhaltige Lösung zum Einsatz kommen, wie ebenfalls umfangreich beschrieben.

### Zeichnungen

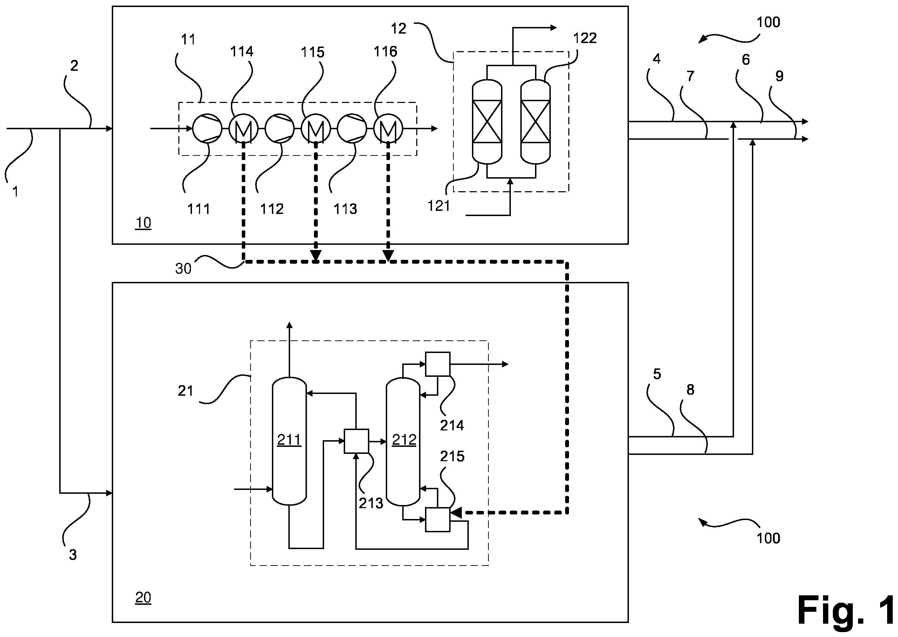

Im Rahmen der vorliegenden Offenbarung vorgeschlagene Aspekte werden anhand der beiliegenden Zeichnung näher erläutert. Dabei zeigt
Figur 1 schematisch eine Ausgestaltung eines vorgeschlagenen Verfahrens.

In Figur 1 ist ein Verfahren gemäß einer hier vorgeschlagenen Ausgestaltung in Form eines stark vereinfachten Ablaufplans veranschaulicht und insgesamt mit 100 bezeichnet. Es versteht sich, dass das in Figur 1 veranschaulichte Verfahren 100 weitere Verfahrensschritte umfassen kann bzw. in einer entsprechenden Anlage weitere Apparate installiert sein können, die in der Darstellung lediglich aus Gründen der Übersichtlichkeit halber weggelassen sind.

In dem Verfahren 100 wird ein Kohlendioxid enthaltendes Gasgemisch 1 bereitgestellt, welches im dargestellten Beispiel zur Bildung zweier Teilströme als Einsatzströme 2 und 3 für eine erste Trenneinrichtung 10 und eine zweite Trenneinrichtung 20 dient. Andere Ausgestaltungen können auch die Bereitstellung mehrerer Gasgemische anstelle des Gasgemischs 1 umfassen, die getrennt oder gemeinsam zur Bereitstellung der Einsatzströme 2 und 3 verwendet werden können.

Die erste Trenneinrichtung 1 ist zur adsorptiven Abtrennung von Kohlendioxid eingerichtet, wie in Figur 1 mit einer stark vereinfacht dargestellten Adsorptionseinheit 12, beispielsweise einer Druckwechseladsorptionseinheit, veranschaulicht. Für die Abtrennung von Kohlendioxid unter Verwendung dieser Adsorptionseinheit 12 muss der erste Einsatzstrom 2, oder ein unter Verwendung zumindest eines Teils des ersten Einsatzstroms 2 gebildeter Folgestrom, verdichtet werden.

Für die Verdichtung ist eine Verdichtungseinheit 11 vorgesehen, die im dargestellten Beispiel drei Verdichterstufen 111, 112 und 113 aufweist. In anderen Ausgestaltungen kann eine beliebige andere Anzahl an Verdichterstufen 111, 112 und 113 vorgesehen sein. Im dargestellten Beispiel sind den Verdichterstufen 111 und 112 jeweils Zwischenkühler 114 und 115 nachgeschaltet, stromab der Verdichterstufe 116 ist ein Abschlusskühler bereitgestellt. Der Verdichtungseinheit 11 können beliebige Vorbehandlungsschritte, beispielsweise zur Trocknung, Temperierung und Abtrennung unerwünschter Komponenten, vorgeschaltet sein.

Es sei betont, dass die Verdichtungseinheit 11, deren Verdichtungswärme gemäß den hier vorgeschlagenen Ausgestaltungen genutzt wird, auch eine Verdichtungseinheit an anderer Stelle des adsorptiven Verfahrens 12 sein kann. Bei entsprechenden adsorptiven Verfahren 12 ist, um eine Reinheit von Kohlendioxid von 90 bzw. über 95% zu erreichen, eine zweite Verdichtung stromab der Druckwechseladsorption in Form eines sogenannten Rohkohlendioxidverdichters erforderlich. Wenn Kohlendioxid für den Pipelinetransport bereitgestellt werden soll, kann ein weiterer, sogenannter Kohlendioxidproduktverdichter zum Einsatz kommen.

Zwischen der Verdichtungseinheit 11 und der Adsorptionseinheit 12 können ebenfalls weitere Schritte bzw. Komponenten zwischengeschaltet sein. Stromab der Adsorptionseinheit 12, die anstelle von zwei dargestellten Adsorberbehältern 121 und 122 auch eine beliebige Anzahl von Adsorberbehältern 121 und 122 aufweisen kann, wird ein hier gebildeter Kohlendioxidstrom beispielsweise einer kryogenen Behandlung unterworfen und dadurch teilkondensiert. Weitere Verfahrensschritte bzw. Apparate zur Membrantrennung, Rückführung, Temperierung, Verdichtung, Entspannung und dergleichen, Kreisläufe, Ventile, Steuer- und Regeleinrichtungen und dergleichen sind lediglich der Übersichtlichkeit halber nicht dargestellt.

Wie bereits zuvor erwähnt, unterscheidet sich der Betrieb der für die adsorptive Abtrennung von Kohlendioxid eingerichteten ersten Trenneinrichtung 10 insbesondere dadurch von jenem bekannter Trenneinrichtungen 10 entsprechender Art, dass die Zwischen- und Abschlusskühler 114, 115 und 116, oder ein Teil derselben, auf einem höheren Temperaturniveau als üblich betrieben werden. Wie ebenfalls erwähnt, wird hierdurch die erforderliche Verdichterleistung der Verdichtungseinheit 11 erhöht, jedoch steht auf diese Weise Wärme 30 zur Verfügung, die in der absorptiv arbeiten zweiten Trenneinrichtung 20 verwendet werden kann.

Die zweite Trenneinrichtung 20 umfasst eine Absorptionsanordnung 21, die in an sich bekannter Weise aufgebaut sein und betrieben werden kann. Auch dieser Absorptionsanordnung 21 können weitere Verfahrensschritte bzw. Anlagenkomponenten vor- und nachgeschaltet sein.

Sie umfasst eine Absorptionskolonne 211, die nur der Übersichtlichkeit halber ohne Einbauten veranschaulicht ist, und eine Regenerationskolonne 212, für die Entsprechendes gilt. Weitere Kühler, Pumpen, Verdichter, Abscheidebehälter, Ventile, Steuer- und Regeleinrichtungen sowie Zuspeiseleitungen für Absorptionsmittel sind erneut lediglich der Übersichtlichkeit halber nicht veranschaulicht.

In die Absorptionskolonne 211 wird am Kopf ein nicht gesondert bezeichneter Absorptionsmittelstrom eingespeist. Ebenfalls am Kopf wird der Absorptionskolonne 211 ein an Kohlendioxid abgereicherter Produktstrom entnommen. Aus dem Sumpf der Absorptionskolonne wird mit Kohlendioxid beladenes Absorptionsmittel abgezogen, in einem Gegenstromwärmetauscher 213 erwärmt, und in die Regenerationskolonne 212 eingespeist. Die Regenerationskolonne 212 wird mit einem Kopfkondensator 214 und einem Sumpfverdampfer 215 betrieben.

In dem Kopfkondensator 214 wird insbesondere Kopfgas der Regenerationskolonne 212 kondensiert, das in die Regenerationskolonne 212 zurückgeführt wird. Nicht kondensiertes Kopfgas wird im Wesentlichen durch Kohlendioxid gebildet, das aus der zweiten Trenneinrichtung 20 ausgeführt werden kann. Im Sumpfverdampfer 215 wird Sumpfflüssigkeit der Regenerationskolonne 212 verdampft, wobei der überwiegende Teil des Kohlendioxids in die Gasphase übergeht und in der Regenerationskolonne 212 aufsteigt. Unverdampfte Sumpfflüssigkeit, d.h. regeneriertes Absorptionsmittel, wird in dem Gegenstromwärmetauscher 213 abgekühlt und wieder in die Absorptionskolonne 211 zurückgespeist.

In der hier veranschaulichten Ausgestaltung wird die in den Zwischen- und Abschlusskühlern 114, 115 und 116 der Verdichtereinheit 11 der ersten Trenneinrichtung 10 abgeführte Wärme 30, direkt oder über beliebige Wärmeüberträgermedien, zur Beheizung des Sumpfverdampfers 215 der Regenerationskolonne 212 der Absorptionsanordnung 21 der zweiten Trenneinrichtung 20 verwendet.

Insgesamt werden der ersten Trenneinrichtung 10 und der zweiten Trenneinrichtung 20 jeweils an Kohlendioxid abgereichterte Produktströme 4 und 5 entnommen, die optional zu einem Sammelstrom 6 vereinigt und weiter verwendet werden können. Zudem werden der ersten Trenneinrichtung 10 und der zweiten Trenneinrichtung 20 Kohlendioxidströme 7 und 8 entnommen, die ebenfalls optional zu einem Sammelstrom 9 vereinigt und eine Nutzung oder Lagerung zugeführt werden können. Insbesondere in der ersten Trenneinrichtung 10 können aufgrund einer dort vorgenommenen Teilkondensation auch Kohlendioxidströme in unterschiedlichen Aggregatzuständen entnommen werden, was ebenfalls der Übersichtlichkeit halber nicht gesondert veranschaulicht ist. Wie bereits zuvor erwähnt, ist es aber auch jederzeit möglich, einen der Produktströme 4 und 5 und/oder einen der Kohlendioxidströme 7 und 8 aus einer der Trenneinrichtungen 10, 20 in die jeweils andere zu führen, beispielsweise um dort aus einem wasserhaltigen Kohlendioxidstrom Wasser abzutrennen. Dies kann an jeder geeigneten Position erfolgen.

## Patentansprüche

1. Verfahren (100) zur Abtrennung von Kohlendioxid aus einem oder mehreren Kohlendioxid enthaltenden Gasgemischen (1), das umfasst:
Bereitstellen eines ersten Kohlendioxid enthaltenden Einsatzstroms (2) und eines zweiten Kohlendioxid enthaltenden Einsatzstroms (3) unter Verwendung des einen oder der mehreren Gasgemische (1);
Bereitstellen einer ersten Trenneinrichtung (10), die zur adsorptiven Abtrennung von Kohlendioxid eingerichtet ist, und einer zweiten Trenneinrichtung (20), die zur absorptiven Abtrennung von Kohlendioxid eingerichtet ist;
adsorptives Abtrennen von Kohlendioxid aus dem ersten Einsatzstrom (2) in der ersten Trenneinrichtung (10); und
absorptives Abtrennen von Kohlendioxid aus dem zweiten Einsatzstrom (3) in der zweiten Trenneinrichtung (20), wobei
die erste Trenneinrichtung (10) und die zweite Trenneinrichtung (20) parallel zueinander betrieben werden,
wobei in der ersten Trenneinrichtung (10) eine Verdichtung unter Verwendung einer Verdichteranordnung (11) vorgenommen wird, in und/oder stromab der Verdichtungswärme abgeführt wird,
wobei in der zweiten Trenneinrichtung (20) eine Regeneration eines Absorptionsmittels unter Verwendung von Regenerationswärme vorgenommen wird,
wobei die in und/oder stromab der Verdichteranordnung (11) abgeführte Verdichtungswärme, oder ein Teil hiervon, bei der Bereitstellung der Regenerationswärme verwendet wird.

2. Verfahren (100) nach Anspruch 1, wobei die Regeneration des Absorptionsmittels unter Verwendung einer Regenerationskolonne (212) durchgeführt wird,
wobei die Regenerationskolonne (212) unter Verwendung eines Sumpfverdampfers (214) betrieben wird und die Regenerationswärme zum Betreiben des Sumpfverdampfers (214) verwendet wird, und/oder wobei ein der der Regenerationskolonne (212) zugeführtes Absorptionsmittel einer Vorwärmung unterworfen und die Regenerationswärme für die Vorwärmung des Absorptionsmittels verwendet wird.

3. Verfahren (100) nach Anspruch 1 oder 2, wobei die in und/oder stromab der Verdichteranordnung (11) abgeführte Verdichtungswärme zumindest zu einem Teil auf einem Temperaturniveau von mehr als 100°C oder mehr als 130°C und bis zu 150°C oder bis zu 200°C abgeführt wird.

4. Verfahren (100) nach einem der vorstehenden Ansprüche, wobei die in und/oder stromab der Verdichteranordnung (11) abgeführte Verdichtungswärme zur Erzeugung von Dampf verwendet wird, der zur Beheizung des Sumpfverdampfers (214) der Regenerationskolonne (212) verwendet wird.

5. Verfahren (100) nach einem der vorstehenden Ansprüche, wobei der Regenerationskolonne (212) der zweiten Trenneinrichtung (20) ein wasserhaltiger Kohlendioxidstrom entnommen wird,
wobei der wasserhaltige Kohlendioxidstrom, oder ein Teil hiervon, der ersten Trenneinrichtung (10) zugeführt wird.

6. Verfahren (100) nach einem der vorstehenden Ansprüche, wobei ein Mengenstrom des ersten Einsatzstroms (2) und des zweiten Einsatzstroms (3) derart eingestellt werden, dass die in und/oder stromab der Verdichteranordnung (11) abgeführte Verdichtungswärme einen Wärmebedarf zur Beheizung des Sumpfverdampfers (214) der Regenerationskolonne (212) deckt.

7. Verfahren (100) nach einem der vorstehenden Ansprüche, wobei das eine oder die mehreren Gasgemische (1) Rauchgas und/oder Prozessgas ist oder sind und/oder hieraus gebildet werden.

8. Verfahren (100) nach einem der vorstehenden Ansprüche,
wobei zwei oder mehr der Gasgemische (1) verwendet werden,
wobei der erste Einsatzstrom (2) ausschließlich, vorwiegend oder teilweise unter Verwendung eines der Gasgemische (1) bereitgestellt wird und/oder wobei der zweite Einsatzstrom (3) ausschließlich, vorwiegend oder teilweise unter Verwendung eines anderen der Gasgemische (1) bereitgestellt wird.

9. Verfahren (100) nach einem der vorstehenden Ansprüche, wobei die adsorptive Trennung in der ersten Trenneinrichtung (10) unter Verwendung einer Adsorptionseinheit (12) durchgeführt wird und/oder in der ersten Trenneinrichtung (10) abgetrenntes Kohlendioxid teilkondensiert wird.

10. Verfahren (100) nach einem der vorstehenden Ansprüche, wobei die absorptive Trennung in der zweiten Trenneinrichtung (20) unter Verwendung eines aminhaltigen Absorptionsmittels durchgeführt wird.

11. Anlage zur Abtrennung von Kohlendioxid aus einem oder mehreren Kohlendioxid enthaltenden Gasgemischen (1), die eine erste Trenneinrichtung (10), die zur adsorptiven Abtrennung von Kohlendioxid eingerichtet ist, und eine zweite Trenneinrichtung (20), die zur absorptiven Abtrennung von Kohlendioxid eingerichtet ist, sowie eine Verbindungsleitung von der ersten Trenneinrichtung (10) zu der zweiten Trenneinrichtung (20) aufweist, wobei die Anlage zur Durchführung der folgenden Schritte eingerichtet ist:
Bereitstellen eines ersten Kohlendioxid enthaltenden Einsatzstroms (2) und eines zweiten Kohlendioxid enthaltenden Einsatzstroms (3) unter Verwendung des einen oder der mehreren Gasgemische (1);
adsorptives Abtrennen von Kohlendioxid aus dem ersten Einsatzstrom (2) in der ersten Trenneinrichtung (10) und absorptives Abtrennen von Kohlendioxid aus dem zweiten Einsatzstrom (3) in der zweiten Trenneinrichtung (20),
wobei die Anlage dafür eingerichtet ist, in der ersten Trenneinrichtung (10) eine Verdichtung unter Verwendung einer Verdichteranordnung (11) vorzunehmen und
in und/oder stromab derselben Verdichtungswärme abzuführen,
wobei die Anlage dafür eingerichtet ist, in der zweiten Trenneinrichtung (20) eine Regeneration eines Absorptionsmittels unter Verwendung von Regenerationswärme vorzunehmen, und
wobei die Anlage dafür eingerichtet ist, die in und/oder stromab der Verdichteranordnung (11) abgeführte Verdichtungswärme, oder einen Teil hiervon,
über einen in der Verbindungsleitung geführten Wärmeträger zur Bereitstellung der Regenerationswärme zu verwenden.

12. Anlage nach Anspruch 11, wobei die Anlage dafür eingerichtet ist, den Wärmeträger ohne Temperaturerhöhung mittels einer Wärmekraftmaschine zwischen der ersten Trenneinrichtung (10) und der zweiten Trenneinrichtung (20) zu führen.

13. Anlage nach Anspruch 11 oder 12, wobei die Anlage zur Durchführung eines Verfahrens (100) nach einem der Ansprüche 1 bis 10 eingerichtet ist.
